# EUROPEAN PATENT APPLICATION

(11) **EP 4 484 726 A1**
(43) Date of publication of application: **01.01.2025**
(21) Application number: 24184640.1
(22) Date of filing: 26.06.2024
(51) Int. Cl.: F02C 6/14, B64D 27/33, B64D 35/08, B64F 5/60, F02C 6/20, F02C 7/36, F02K 5/00

(54) **TESTING SECONDARY POWER SYSTEM OF AIRCRAFT POWERPLANT**

(30) Priority: 26.06.2023 US 202318214256
(71) Applicant: PRATT & WHITNEY CANADA CORP., Longueuil, Québec J4G 1A1 (CA)
(72) Inventor: MARK, Michael, (01BE5) Longueuil, J4G 1A1 (CA); HANNA, Michael, (01BE5) Longueuil, J4G 1A1 (CA)
(74) Representative: Dehns

(57) **Abstract**

A method of operation is provided. During this method, a first power system of an aircraft powerplant is operated to provide a first quantity of power and/or torque to drive rotation of a propulsor rotor. A second power system of the aircraft powerplant is tested during the operating of the first power system. The second power system is configured as or otherwise includes an electric machine. The testing of the second power system includes: signaling the second power system to use the electric machine to provide a second quantity of power and/or torque to further drive the rotation of the propulsor rotor; determining an operational parameter of the aircraft powerplant following the signaling; and evaluating operability of the second power system by comparing the operational parameter to a threshold.

## Description

### TECHNICAL FIELD

This disclosure relates generally to an aircraft powerplant and, more particularly, to testing a power system of the aircraft powerplant.

### BACKGROUND INFORMATION

Various methods and systems are known in the art for testing systems of an aircraft powerplant such as a gas turbine engine. While these known testing methods and systems have various advantages, there is still room in the art for improvement.

### SUMMARY

According to an aspect of the present disclosure, a method of operation is provided. During this method, a first power system of an aircraft powerplant is operated to provide a first quantity of power and/or torque to drive rotation of a propulsor rotor. A second power system of the aircraft powerplant is tested during the operating of the first power system. The second power system is configured as or otherwise includes an electric machine. The testing of the second power system includes: signaling the second power system to use the electric machine to provide a second quantity of power and/or torque to further drive the rotation of the propulsor rotor; determining an operational parameter of the aircraft powerplant following the signaling; and evaluating operability of the second power system by comparing the operational parameter to a threshold.

According to another aspect of the present disclosure, which the Applicant expressly reserves the right to claim independently, another method of operation is provided. During this method, a first power system of an aircraft powerplant is operated to provide a first quantity of power and/or torque to drive rotation of a propulsor rotor. A second power system of the aircraft powerplant is tested during the operating of the first power system. The second power system is configured as or otherwise includes an electric machine. The testing of the second power system includes: signaling the second power system to provide a second quantity of power and/or torque to further drive the rotation of the propulsor rotor; and monitoring operation of the aircraft powerplant following the signaling to evaluate operability of the second power system.

According to still another aspect of the present disclosure, which the Applicant expressly reserves the right to claim independently, another method of operation is provided. During this method, a first power system of an aircraft powerplant is operated to provide a first quantity of power and/or torque to drive rotation of a propulsor rotor. A second power system of the aircraft powerplant is intermittently operated during the operating of the first power system to provide a second quantity of power and/or torque to further drive the rotation of the propulsor rotor and reduce dormancy of the second power system. The second power system is configured as or otherwise includes an electric machine. The first power system and the second power system are independently operatively coupled to the propulsor rotor.

The monitoring of the operation of the aircraft powerplant may include: determining an operational parameter of the aircraft powerplant following the signaling; and processing the operational parameter to evaluate operability of the second power system.

The first power system and the second power system may be operatively coupled to the propulsor rotor in parallel.

The operational parameter may be indicative of power output by the aircraft powerplant.

The operational parameter may be indicative of propulsor rotor rotational velocity.

The operational parameter may be indicative of a pressure ratio of the aircraft powerplant.

The operational parameter may be indicative of torque output by the aircraft powerplant.

The operational parameter may be indicative of power output by the second power system.

The operational parameter may be indicative of torque output by the second power system.

The threshold may be configured as or otherwise include an expected value of the operational parameter.

The method may also include determining the second power system has a fault where the operational parameter is less than the expected value.

The threshold may be an expected operating range for the operational parameter.

The method may also include determining the second power system has a fault where the operational parameter is outside of the expected operating range.

The first power system may be operated at a constant power and/or a constant torque setting during the testing of the second power system.

The propulsor rotor may be configured as or otherwise include an un-ducted propulsor rotor.

The propulsor rotor may be configured as or otherwise include a ducted propulsor rotor.

An aircraft may include the aircraft powerplant. The testing of the second power system may be performed while the aircraft is in flight.

The first power system and the second power system may be individually coupled to the propulsor rotor through a geartrain.

The first power system may be configured as or otherwise include a turbo-compounded intermittent internal combustion engine. The turbo-compounded intermittent internal combustion engine may provide the first quantity of power and/or torque to drive the rotation of the propulsor rotor during the operating of the first power system.

The first power system may be configured as or otherwise include a gas turbine engine. The gas turbine engine may provide the first quantity of power and/or torque to drive the rotation of the propulsor rotor during the operating of the first power system.

The first power system may be configured as or otherwise include an electric motor. The electric motor may provide the first quantity of power and/or torque to drive the rotation of the propulsor rotor during the operating of the first power system.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft powerplant with multiple power systems.
FIG. 2 is a partial schematic illustration of the aircraft powerplant with its primary power system including an intermittent internal combustion engine.
FIG. 3 is a partial schematic illustration of the aircraft powerplant with its secondary power system including an electric machine.
FIG. 4 is a schematic illustration of a controller.
FIG. 5 is a partial schematic illustration of the aircraft powerplant with its primary power system including a continuous internal combustion engine.
FIG. 6 is a partial schematic illustration of the aircraft powerplant with its primary power system including an electric machine.
FIG. 7 is a flow diagram of a method of operation for an aircraft powerplant.

### DETAILED DESCRIPTION

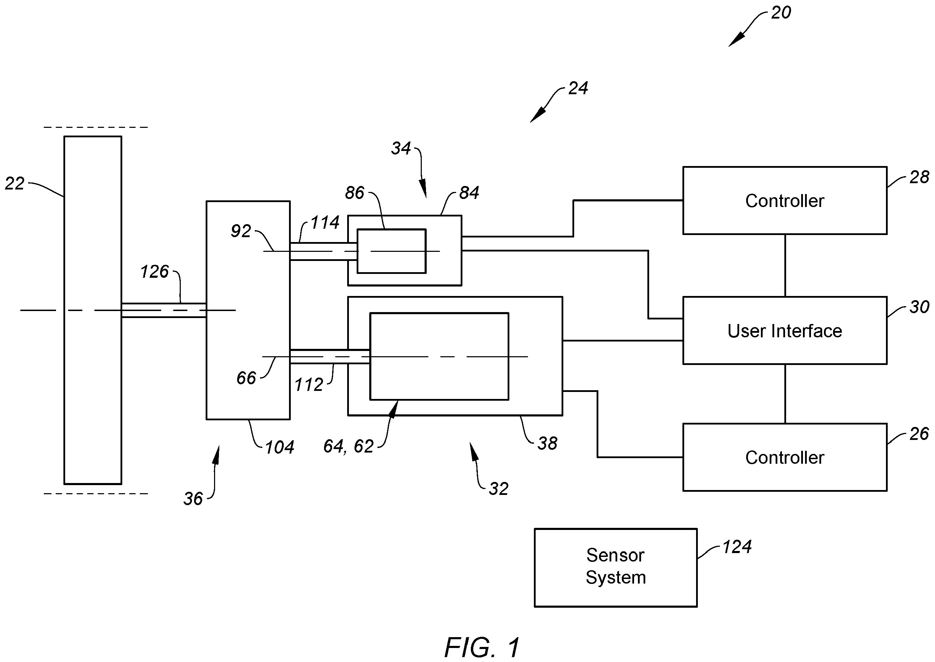

FIG. 1 illustrates a propulsion system 20 for an aircraft. The aircraft may be a fixed wing aircraft (e.g., an airplane), a rotorcraft (e.g., a helicopter), a drone (e.g., an unmanned aerial vehicle (UAV)) or any other manned or unmanned aerial vehicle or system. The aircraft propulsion system 20 of FIG. 1 includes a propulsor rotor 22 and an aircraft powerplant 24 configured to drive rotation of the propulsor rotor 22. The aircraft propulsion system 20 also includes a control system for controlling operation of the aircraft propulsion system 20 and its aircraft powerplant 24. This control system of FIG. 1 includes a primary power system controller 26 ("primary controller"), a secondary power system controller 28 ("secondary controller") and a user interface 30.

The propulsor rotor 22 is an air mover operable to generate thrust and/or lift for the aircraft. This propulsor rotor 22 may be configured as an open, un-ducted propulsor rotor or a ducted propulsor rotor. Examples of the un-ducted propulsor rotor include a propeller rotor for a propeller (e.g., turboprop) propulsion system, a rotorcraft rotor (e.g., a main helicopter rotor) for a rotorcraft (e.g., turboshaft) propulsion system, a propfan rotor for a propfan propulsion system and a pusher fan rotor for a pusher fan propulsion system. Examples of the ducted propulsor rotor include a fan rotor for a turbofan propulsion system and a (e.g., first stage) compressor rotor for a turbojet propulsion system. The present disclosure, however, is not limited to the foregoing exemplary un-ducted and ducted propulsor rotors. The propulsor rotor 22 of FIG. 1 includes a propulsor rotor base (e.g., a disk or a hub) and a plurality of propulsor rotor blades (e.g., airfoils). The propulsor rotor blades are arranged circumferentially around the propulsor rotor base in an array. Each of the propulsor rotor blades is connected to (e.g., formed integral with or mechanically fastened, welded, brazed and/or otherwise attached to) and projects radially out from the propulsor rotor base.

The aircraft powerplant 24 includes a primary (e.g., main) power system 32 and a secondary (e.g., backup, supplemental, emergency, etc.) power system 34. The aircraft powerplant 24 also includes a drivetrain 36 operatively coupling the primary power system 32 and the secondary power system 34 to the propulsor rotor 22.

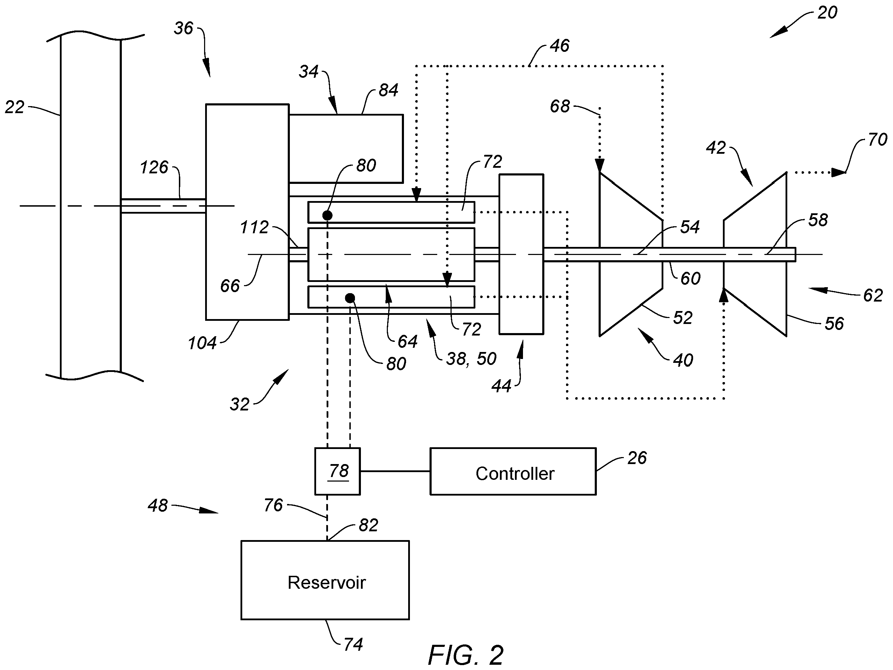

Referring to FIG. 2, the primary power system 32 may be configured as or otherwise include a heat engine 38. The primary power system 32, for example, may be configured as a turbo-compounded heat engine. The primary power system 32 of FIG. 2, in particular, includes the heat engine 38, a compressor section 40, a turbine section 42 and a power system geartrain 44; e.g., a turbine gearbox. The primary power system 32 also includes a flowpath 46 and a fuel system 48.

The heat engine 38 may be configured as or otherwise include an intermittent internal combustion (IC) engine 50 ("intermittent combustion engine"). The intermittent combustion engine 50 is an internal combustion (IC) engine in which a mixture of fuel and air is intermittently (e.g., periodically) detonated within the engine. Examples of the intermittent combustion engine 50 include, but are not limited to, a reciprocating piston engine (e.g., an inline (I) engine, a V-engine, a W-engine, etc.), a rotary engine (e.g., a Wankel engine), a rotating detonation engine and a pulse detonation engine. The present disclosure, however, is not limited to intermittent combustion engine applications.

The compressor section 40 includes a bladed compressor rotor 52. This compressor rotor 52 may be configured as a radial flow compressor rotor; e.g., an axial inflow-radial outflow compressor rotor, a centrifugal compressor rotor, a compressor impeller, etc. Alternatively, the compressor rotor 52 may be configured as an axial flow compressor rotor; e.g., an axial inflow-axial outflow compressor rotor. Still alternatively, the compressor rotor 52 may include a combination of radial flow and axial flow stages. The compressor rotor 52 of FIG. 2 includes a compressor rotor base (e.g., a disk or a hub) and a plurality of compressor rotor blades (e.g., airfoils, vanes, etc.). The compressor rotor blades are arranged circumferentially around the compressor rotor base in an array. Each of the compressor rotor blades is connected to (e.g., formed integral with or mechanically fastened, welded, brazed and/or otherwise attached to) and projects radially out from the compressor rotor base. The compressor rotor 52 is rotatable about a compressor axis 54.

The turbine section 42 includes a bladed turbine rotor 56. This turbine rotor 56 may be configured as a radial flow turbine rotor; e.g., a radial inflow-axial outflow turbine rotor, a centrifugal turbine rotor, a turbine wheel, etc. Alternatively, the turbine rotor 56 may be configured as an axial flow turbine rotor; e.g., an axial inflow-axial outflow turbine rotor. Still alternatively, the turbine rotor 56 may include a combination of radial flow and axial flow stages. The turbine rotor 56 of FIG. 2 includes a turbine rotor base (e.g., a disk or a hub) and a plurality of turbine rotor blades (e.g., airfoils, vanes, etc.). The turbine rotor blades are arranged circumferentially around the turbine rotor base in an array. Each of the turbine rotor blades is connected to (e.g., formed integral with or mechanically fastened, welded, brazed and/or otherwise attached to) and projects radially out from the turbine rotor base. The turbine rotor 56 is rotatable about a turbine axis 58, which turbine axis 58 may be parallel (e.g., coaxial) with the compressor axis 54.

The turbine rotor 56 may be coupled to the compressor rotor 52 through an intermediate shaft 60. Here, at least (or only) the compressor rotor 52, the turbine rotor 56 and the intermediate shaft 60 may collectively form a rotating assembly 62; e.g., a spool. The rotating assembly 62 and its turbine rotor 56 may also be coupled to an internal rotating assembly 64 of the heat engine 38 (e.g., the intermittent combustion engine 50) through the power system geartrain 44 (or otherwise). The rotating assembly 64 of the heat engine 38 is rotatable about a rotating assembly axis 66, which rotating assembly axis 66 may be parallel with or offset from the axes 54 and 58.

The flowpath 46 of FIG. 2 extends longitudinally from an airflow inlet 68 into the flowpath 46, sequentially through the compressor section 40, the heat engine 38 and the turbine section 42, to a combustion products exhaust 70 from the flowpath 46. The flowpath inlet 68 may also be an airflow inlet into the aircraft powerplant 24 and its primary power system 32. The flowpath exhaust 70 may also be a combustion products exhaust from the aircraft powerplant 24 and its primary power system 32.

The fuel system 48 is configured to deliver fuel to one or more combustion zones 72 of the primary power system 32. Each combustion zone 72 of FIG. 2 is located within the heat engine 38, and may be formed by a respective portion of the flowpath 46. Each combustion zone 72, for example, may be configured as or otherwise include a (e.g., axial flow, a reverse flow, etc.) combustion chamber, a piston bore and/or the like within the heat engine 38.

The fuel system 48 of FIG. 2 includes a fuel reservoir 74, a fuel circuit 76, a fuel flow regulator 78 and one or more fuel injectors 80. The fuel reservoir 74 is configured to store fuel before, during and/or after aircraft powerplant operation. The fuel reservoir 74, for example, may be configured as or otherwise include a tank, a cylinder, a pressure vessel, a bladder or any other type of fuel storage container. The fuel circuit 76 of FIG. 2 is fluidly coupled with an outlet 82 from the fuel reservoir 74, and extends longitudinally through the fuel flow regulator 78 to the fuel injectors 80. The fuel circuit 76 thereby fluidly couples the fuel reservoir 74 to the fuel injectors 80, through the fuel flow regulator 78. The fuel flow regulator 78 is configured to selectively direct and/or meter a flow of the fuel from the fuel reservoir 74 to one or more of the fuel injectors 80. The fuel flow regulator 78, for example, may be configured as or otherwise include a fuel pump and/or a valve (or valve system). The fuel injectors 80 are arranged with (e.g., on, along, in, etc.) the combustion zones 72. These fuel injectors 80 are configured to direct (e.g., inject) the fuel into the combustion zones 72 to mix with compressed air for subsequent combustion.

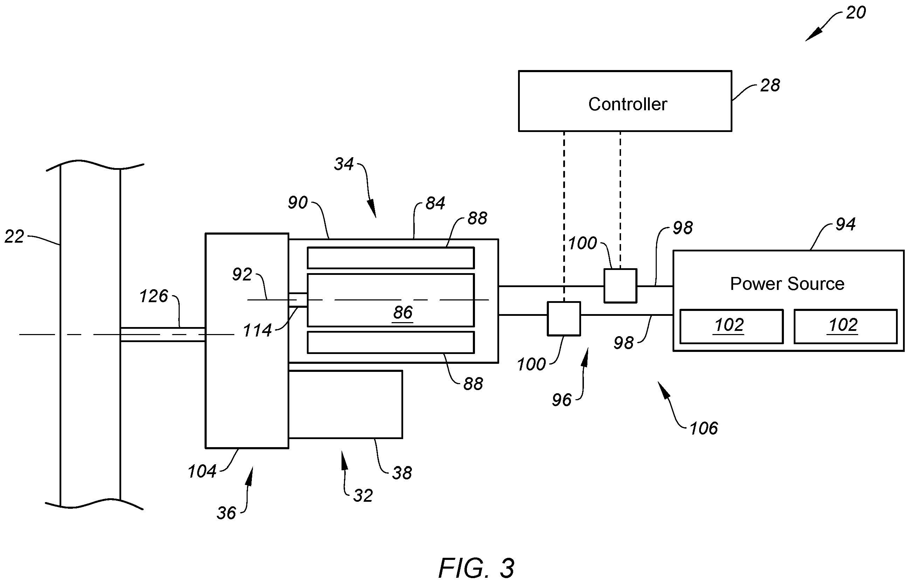

Referring to FIG. 3, the secondary power system 34 may be configured as or otherwise include an electric machine 84. This electric machine 84 of FIG. 3 includes an electric machine rotor 86, an electric machine stator 88 and an electric machine housing 90. The machine rotor 86 is rotatable about a rotational axis 92 of the machine rotor 86, which rotational axis 92 may also be an axial centerline of the electric machine 84. The machine stator 88 of FIG. 3 is radially outboard of and circumscribes the machine rotor 86. With this arrangement, the electric machine 84 is configured as a radial flux electric machine. The electric machine 84 of the present disclosure, however, is not limited to such an exemplary rotor-stator configuration nor to radial flux arrangements. The machine rotor 86, for example, may alternatively be radially outboard of and circumscribe the machine stator 88. In another example, the machine rotor 86 may be axially next to the machine stator 88 configuring the electric machine 84 as an axial flux electric machine. Referring again to FIG. 3, the machine rotor 86 and the machine stator 88 are at least partially or completely housed within the machine housing 90.

The electric machine 84 of FIG. 3 may be configurable as an electric generator and/or an electric motor. For example, during a generator mode of operation, the electric machine 84 may operate as the electric generator to convert mechanical power received from, for example, the primary power system 32 into electricity. The primary power system 32, for example, may drive rotation of the machine rotor 86 through the drivetrain 36. The rotation of the machine rotor 86 may generate an electromagnetic field with the machine stator 88, and the machine stator 88 may convert energy from the electromagnetic field into the electricity. The electric machine 84 may then provide this electricity to an electricity power source 94 for further use. During a motor mode of operation, the electric machine 84 may operate as the electric motor to convert electricity received from the electricity power source 94 into mechanical power. The machine stator 88, for example, may generate an electromagnetic field with the machine rotor 86 using the electricity. This electromagnetic field may drive rotation of the machine rotor 86. The rotation of the machine rotor 86 may drive rotation of the propulsor rotor 22 through the drivetrain 36. The mechanical power may be provided to the propulsor rotor 22 to boost power or completely power rotation of the propulsor rotor 22 as described below in further detail. Of course, in other embodiments, the electric machine 84 may alternatively be configured as a dedicated electric motor (e.g., without the electric generator functionality).

The electricity power source 94 includes is electrically coupled with the electric machine 84 through electrical circuitry 96; e.g., a power bus. This electrical circuitry 96 may include one or more electrical leads 98 (e.g., high voltage lines) and one or more electrical devices 100 for conditioning, metering, regulating and/or otherwise controlling electrical power transfer between the electric machine 84 and the electricity power source 94. Examples of the electrical devices 100 include, but are not limited to, switches, current regulators, converters and buffers.

The electricity power source 94 is configured to store electricity. The electricity power source 94 is also configured to provide the stored electricity to the electric machine 84 and/or receive electricity from the electric machine 84; e.g., during recharging. The electricity power source 94, for example, may be configured as or otherwise include one or more electricity storage devices 102; e.g., batteries, etc.

Referring to FIG. 1, the drivetrain 36 may independently couple the primary power system 32 and the secondary power system 34 to the propulsor rotor 22. The primary power system 32 and the secondary power system 34 of FIG. 1, for example, are coupled to the propulsor rotor 22 in parallel through the drivetrain 36. This drivetrain 36 is configured as a geared drivetrain and includes a propulsor geartrain 104; e.g., a transmission, a speed change device, an epicyclic geartrain, etc. The propulsor geartrain 104 is disposed between and operatively couples the propulsor rotor 22 to the primary power system 32 and its rotating assembly 64. The propulsor geartrain 104 is also disposed between and operatively couples the propulsor rotor 22 to the secondary power system 34 and its machine rotor 86. With this arrangement, the propulsor rotor 22 may be discretely driven by the primary power system 32, discretely driven by the secondary power system 34 and/or collectedly driven by both the primary power system 32 and the secondary power system 34. Moreover, the propulsor rotor 22 may rotate at a different (e.g., slower) rotational velocity that the rotating assembly 64 and/or the machine rotor 86. However, in other embodiments, it is contemplated the drivetrain 36 and its propulsor geartrain 104 may alternatively be geared simply as a power coupling such that the propulsor rotor 22 may rotate at a common (the same) rotational velocity with the rotating assembly 64 and/or the machine rotor 86. Furthermore, while the powerplant power systems 32 and 34 are independently coupled to the propulsor rotor 22 in FIG. 1, it is contemplated the powerplant power systems 32 and 34 may alternatively be coupled to the propulsor rotor 22 in series in other embodiments.

Referring to FIG. 2, the primary controller 26 is configured to control operation of the primary power system 32 and its fuel system 48. The primary controller 26 of FIG. 2, for example, is in signal communication with (e.g., hardwired and/or wirelessly coupled to) the primary power system 32 and its fuel flow regulator 78. Here, the primary controller 26 may be configured as a main onboard powerplant controller; e.g., an electronic engine controller (EEC), an electronic control unit (ECU), a full-authority digital engine controller (FADEC), etc.

Referring to FIG. 3, the secondary controller 28 is configured to control operation of the secondary power system 34 and its electric machine 84. The secondary controller 28 of FIG. 3, for example, is in signal communication with the secondary power system 34 and its electric system 106, which electric system 106 includes the electricity power source 94 and the electrical circuitry 96.

The powerplant controllers 26 and 28 may be independent of one another. The primary controller 26 and the secondary controller 28, for example, may be configured as different electronic devices and may even be located remote from one another within the aircraft powerplant 24. With such an arrangement, the primary controller 26 is operable to control the primary power system 32 even where, for example, the secondary controller 28 is non-operation and/or inoperable. Similarly, the secondary controller 28 is operable to control the secondary power system 34 even where, for example, the primary controller 26 is non-operational and/or inoperable.

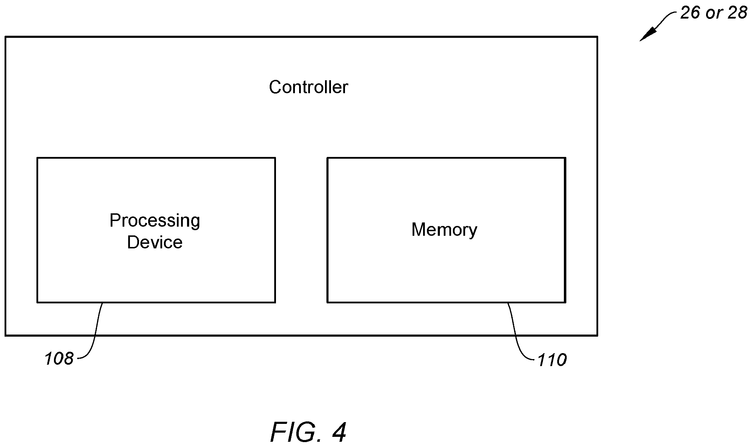

Referring to FIG. 4, each powerplant controller 26, 28 may be implemented with a combination of hardware and software. The hardware may include at least one processing device 108 and memory 110. The processing device 108 may include one or more single-core and/or multi-core processors. The hardware may also or alternatively include analog and/or digital circuitry other than that described above. The memory 110 is configured to store software (e.g., program instructions) for execution by the processing device 108, which software execution may control and/or facilitate performance of one or more operations such as those described below. The memory 110 may be a non-transitory computer readable medium. For example, the memory 110 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

The user interface 30 may be in signal communication with the primary controller 26, for example independent of the secondary controller 28. The user interface 30 may be in signal communication with the secondary controller 28, for example independent of the primary controller 26. The user interface 30 may also or alternatively be in signal communication with the secondary power system 34, for example independent of the primary controller 26 and/or the secondary controller 28. With such an arrangement, the user interface 30 may provide personnel operating the aircraft powerplant 24 / the aircraft (e.g., a pilot) manual control over use of the primary power system 32 and/or the secondary power system 34 under certain conditions. The user interface 30 may include one or more user interface devices such as, but not limited to, a switch panel, a throttle, a control knob, and the like.

The aircraft powerplant 24 of FIG. 1 is configured to operate in various modes of operation. During a first mode, the aircraft powerplant 24 may operate using (e.g., only) the primary power system 32. Here, the secondary power system 34 may be non-operational (e.g., turned off), or the electric machine 84 may be operating as the electric generator. This first mode may be selected during normal aircraft flight; e.g., regular power operation, cruise, etc. During a second mode, the aircraft powerplant 24 may operate using the primary power system 32 and the secondary power system 34. This second mode may be selected during an emergency and/or when there is higher than normal power demand on the aircraft powerplant 24. The second mode may also be selected to test operability of the secondary power system 34 and its electric machine 84. While (e.g., ideally) both the primary power system 32 and the secondary power system 34 operate during the second mode, it is also contemplated the primary power system 32 may be non-operable and/or inoperable during the second mode.

Referring to FIG. 2, during the first mode, the primary controller 26 signals the fuel system 48 to deliver the fuel to the combustion zones 72. The fuel is mixed with compressed air within the combustion zones 72. This fuel-air mixture is ignited, and combustion products generated therefrom drive rotation of the rotating assembly 64 of the heat engine 38. The rotation of the rotating assembly 64 drives rotation of the propulsor rotor 22 through the drivetrain 36 and its propulsor geartrain 104, and the rotating propulsor rotor 22 generates aircraft thrust and/or lift. The combustion products further flow out of the heat engine 38 into the turbine section 42 and drive rotation of the turbine rotor 56. The rotation of the turbine rotor 56 drives rotation of the compressor rotor 52, and the rotating compressor rotor 52 compresses air entering the aircraft powerplant 24 and its flowpath 46 through the flowpath inlet 68 to provide the compressed air to the heat engine 38. During this first mode of operation, the primary power system 32 (e.g., alone) may provide all power needed for aircraft powerplant operation; e.g., the propulsor rotor 22 may be solely powered by the primary power system 32.

During the second mode, the aircraft powerplant 24 may be operated substantially as described above during the first mode. However, during this second mode, the secondary controller 28 of FIG. 3 (or the user interface 30, or the primary controller 26; see FIG. 1) signals the electric system 106 to direct electricity from the electricity power source 94 to the electric machine 84. This electricity powers operation of the electric machine 84 as the electric motor and drives rotation of the machine rotor 86, for example as described above. The rotation of the machine rotor 86 further drives rotation of the propulsor rotor 22 through the drivetrain 36 and its propulsor geartrain 104, and the rotating propulsor rotor 22 continues to generate aircraft thrust and/or lift. The secondary power system 34 and its electric machine 84 (here, the electric motor) may thereby boost power to the propulsor rotor 22 from the primary power system 32. The primary power system 32 of FIG. 1, for example, may provide (e.g., output at engine output shaft 112) a first quantity of the power for driving the propulsor rotor 22, and the secondary power system 34 may provide (e.g., output at electric machine shaft 114) a second quantity of the power for driving the propulsor rotor 22.

While both the primary power system 32 and the secondary power system 34 power operation of the propulsor rotor 22 during the second mode, it is contemplated the secondary power system 34 may also be operable to power operation of the propulsor rotor 22 without the primary power system 32; e.g., alone. The secondary power system 34 may thereby be capable of facilitating derated and/or full aircraft propulsion system operation; e.g., in an unlikely event the primary power system 32 becomes inoperable, for example.

A maximum power output from the secondary power system 34 and its electric machine 84 may be equal to or less than (e.g., 50%, 60%, 70% or more of) a maximum power output from the primary power system 32. It is contemplated, however, the maximum power output from the secondary power system 34 and its electric machine 84 may alternatively be greater than the maximum power output from the primary power system 32.

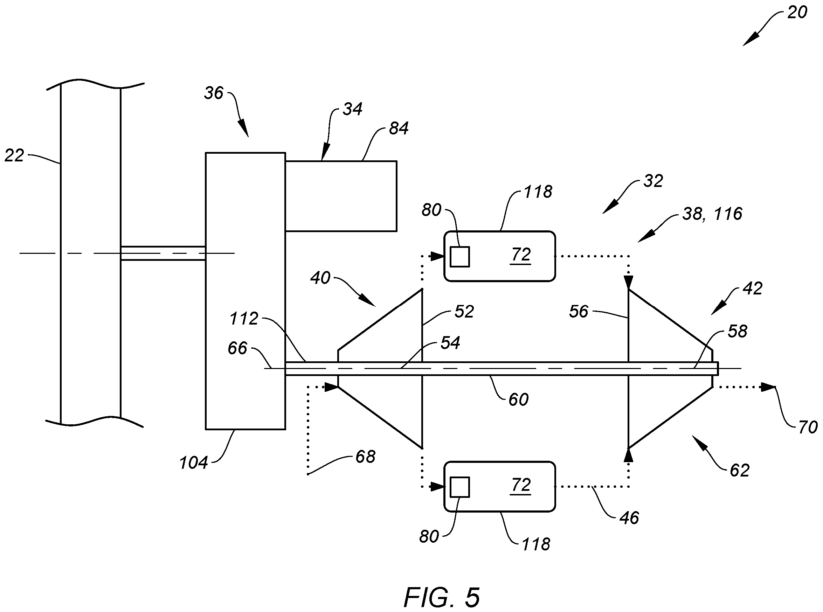

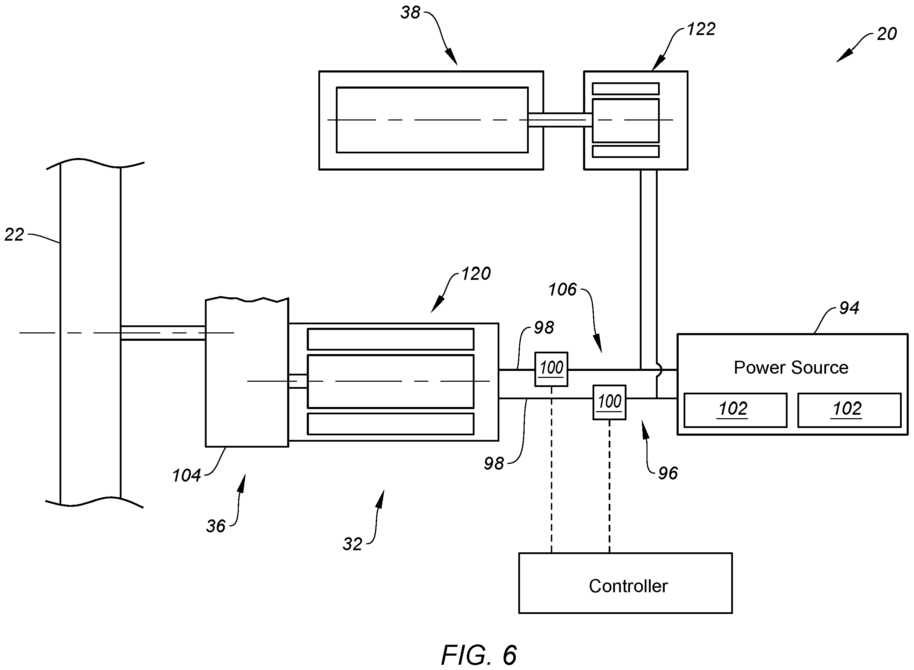

While the heat engine 38 may be configured as an intermittent combustion engine (e.g., 50 in FIG. 2) as described above, the present disclosure is not limited to such applications. For example, referring to FIG. 5, the heat engine 38 and, more generally, the primary power system 32 may alternatively be configured as a continuous internal combustion engine such as, but not limited to, a gas turbine engine 116. With such an arrangement, the combustion zone 72 is located within a combustor 118 (e.g., an annular combustor) within the gas turbine engine 116. While the gas turbine engine 116 of FIG. 5 is shown as a single rotating assembly (e.g., spool) engine for ease of illustration, it is contemplated the gas turbine engine 116 may alternatively include two or more rotating assemblies; e.g., spools. Moreover, while the heat engine 38 of the primary power system 32 are generally described above as mechanically powering the propulsor rotor 22 through the drivetrain 36, it is contemplated the primary power system 32 may alternatively include an intermediate apparatus between the heat engine 38 and the drivetrain 36. For example, referring to FIG. 6, the primary power system 32 may alternatively be configured as or otherwise include an electric motor 120 (or, more generally, another electric machine). This electric motor 120 may receive electricity from the electricity power source 94, and the electricity power source 94 may receive its stored electricity from an electric generator 122 driven by the heat engine 38. Alternatively, the electric generator 122 may directly provide electricity to the electric motor 120 for operation.

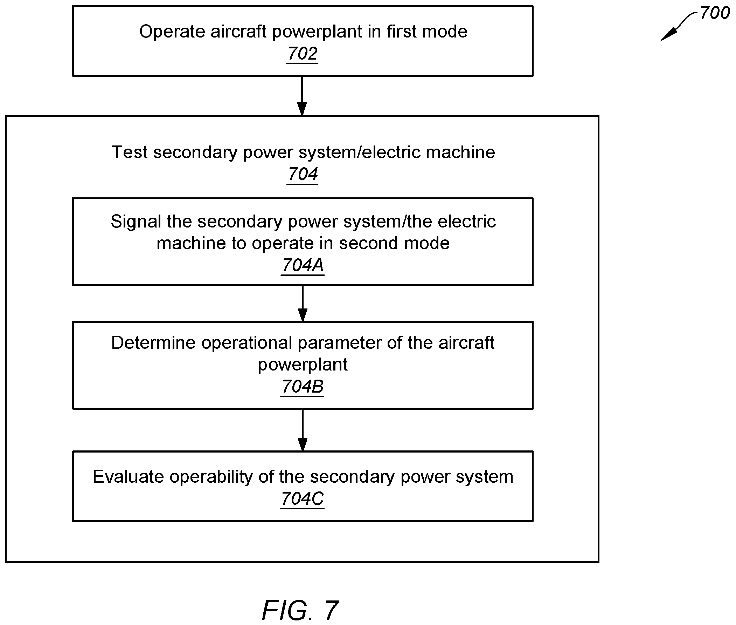

FIG. 7 illustrates a method 700 of operation for an aircraft powerplant. For ease of description, the operating method 700 is described below with reference to the aircraft powerplant 24 of FIG. 1 and the powerplant power systems 32 and 34 of FIGS. 2 and 3. The operating method 700 of the present disclosure, however, is not limited to such an exemplary aircraft powerplant.

In step 702, the aircraft powerplant 24 is operated in the first mode. During this first mode, the primary controller 26 may signal the primary power system 32 and its fuel system 48 to deliver the fuel to the combustion zones 72 for combustion, for example as described above.

In step 704, operability of the secondary power system 34 and its electric machine 84 and/or its electric system 106 are tested. For example, in step 704A, the secondary controller 28 (or the user interface 30, or the primary controller 26) may signal the secondary power system 34 to further drive (e.g., boost power to) the propulsor rotor 22. In particular, the electric system 106 may be signaled to direct electricity to the electric machine 84 to facilitate operation of the electric machine 84 as the electric motor. Meanwhile, the primary power system 32 may continue to operate and drive rotation of the propulsor rotor 22. The secondary power system 34 may thereby be signaled to operate in the second mode along with the primary power system 32, for example as described above.

In step 704B, an operational parameter of the aircraft powerplant 24 is determined; e.g., measured, calculated, modeled, estimated, etc. This operational parameter is determined following (e.g., temporally after) the signaling to the secondary power system 34 to further drive rotation of the propulsor rotor 22. A sensor system 124, for example, may measure one or more powerplant parameters such as, but not limited to, shaft torque, shaft speed, shaft deflection, gas temperature, gas pressure, etc. Data associated with the one or more powerplant parameters may then be processed by the secondary controller 28 (or the primary controller 26, or still another controller for this testing) to determine the operational parameter. Alternatively, the sensor system 124 may directly measure the operational parameter. The operational parameter may be indicative of a (e.g., total) power output by the aircraft powerplant 24 (e.g., at propulsor shaft 126, at an element within the propulsor geartrain 104, etc.), a rotational velocity (e.g., speed) of the propulsor rotor 22, a pressure ratio of the aircraft powerplant 24, a (e.g., total) torque output by the aircraft powerplant 24 (e.g., at the propulsor shaft 126, at the element within the propulsor geartrain 104, etc.), and/or the like. Alternatively, the operational parameter may be indicative of a (e.g., total) power output by the secondary power system 34 (e.g., at the electric machine shaft 114), a (e.g., total) torque output by the secondary power system 34 (e.g., at the electric machine shaft 114), and/or the like.

In step 704C, the operability of the secondary power system 34 and its elements 84 and 106 are evaluated. The secondary controller 28 (or the primary controller 26, or still another controller for this testing), for example, may compare the operational parameter to a threshold. This threshold may be a constant threshold. Alternatively, the threshold may be a variable threshold which changes based on, for example, environmental conditions, current aircraft powerplant power setting, etc. The threshold may be indicative of an expected value for the operational parameter determined in the step 704B. Alternatively, the threshold may be indicative of an expected operating range for the operational parameter determined in the step 704B. Herein, the term "expected" may describe a value the operational parameter would have, or an operating range in which the operational parameter would fall, where the secondary power system 34 and its elements 84 and 106 are (e.g., fully) operational.

Where the threshold is an expected value, the secondary controller 28 (or the primary controller 26, or still another controller for this testing) may determine the secondary power system 34 and its elements 84 and 106 are (e.g., fully) operational where the operational parameter is equal to or greater than the expected value. However, the secondary controller 28 (or the primary controller 26, or still another controller for this testing) may determine the secondary power system 34 and at least one its elements 84 and/or 106 have a fault where the operational parameter is less than the expected value. This fault may be a condition where the secondary power system 34 and its electric machine 84 are operating below a minimum (e.g., required) level; e.g., a level below a design specification for the secondary power system 34 and its electric machine 84. The fault may also or alternatively be a condition where the secondary power system 34 and its electric machine 84 are inoperable; e.g., due to a malfunction, etc.

Where the threshold is an expected operating range, the secondary controller 28 (or the primary controller 26, or still another controller for this testing) may determine the secondary power system 34 and its elements 84 and 106 are (e.g., fully) operational where the operational parameter is within the expected operating range. However, the secondary controller 28 (or the primary controller 26, or still another controller for this testing) may determine the secondary power system 34 and at least one of its elements 84 and/or 106 have a fault where the operational parameter is outside of (e.g., less than, greater than) the expected operating range. Again, this fault may be a condition where the secondary power system 34 and its electric machine 84 are operating below a minimum (e.g., required) level. The fault may also or alternatively be a condition where the secondary power system 34 and its electric machine 84 are inoperable.

Where the fault in the operation of the secondary power system 34 and at least one of its elements 84 and/or 106 is identified, the user interface 30 (and/or another device) may be utilized to inform the personnel operating the aircraft powerplant 24 / the aircraft; e.g., the pilot. Information associated with the fault may also or alternatively be saved in a memory (e.g., the memory 110) for later retrieval by maintenance personnel or the like. Information may also or alternatively be saved associated with positive evaluations of the secondary power system 34 and its elements 84 and 106. This information may then be used for certifications and the like.

The testing step 704 may be performed to test the secondary power system 34 and its elements 84 and 106 at partial power or at full power. For example, during the testing, the secondary power system 34 and its electric system 106 may be signaled to operate the electric machine 84 as the electric motor at a minimum power setting or an intermediate power setting, which intermediate power setting is between the minimum power setting and a maximum power setting for the electric machine 84. Alternatively, during the testing, the secondary power system 34 and its electric system 106 may be signaled to operate the electric machine 84 as the electric motor at the maximum power setting.

The testing step 704 may also be performed to test the secondary power system 34 while the primary power system 32 is at an intermediate or maximum power setting. For example, during the testing, the primary power system 32 and its fuel system 48 may be signaled to direct the fuel into the combustion zones 72 at a minimum flowrate or at an intermediate flowrate, which intermediate flowrate is between the minimum flowrate and a maximum flowrate for the fuel system 48. To facilitate the testing step 704 with the primary power system 32 at this minimum or intermediate power setting, the primary controller 26 may signal the primary power system 32 to decrease its power setting / fuel flow prior to the testing step 704. Of course, in other embodiments, the primary power system 32 and its fuel system 48 may be signaled to direct the fuel into the combustion zones 72 at the maximum flowrate during the testing step 704.

In general, the primary power system 32 may be maintained at a constant power and/or a constant torque setting during the testing step 704. However, this power setting may gradually be increased as the power setting of the secondary power system 34 is gradually decreased following the testing step 704. In other words, the power settings of the primary power system 32 and the secondary power system 34 may be modulated and collectively timed to provide a relatively smooth power output following the testing; e.g., as the second power system is depowered and turned off.

The operating method 700 and its testing step 704 may be performed while the aircraft is in flight. Alternatively, the operating method 700 and the testing step 704 may be performed while the aircraft is on ground.

In some embodiments, the testing step 704 may be performed periodically during aircraft powerplant operation; e.g., during an aircraft flight. In addition to testing the operability of the secondary power system 34, the periodic performance of the testing step 704 and, more generally, the operation of the secondary power system 34 and its electric machine 84 reduces dormancy of the secondary power system 34 and its electric machine 84. In general, reducing dormancy of the secondary power system 34 and its electric machine 84 reduces likelihood of secondary power system faults.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method of operation, comprising:
operating a first power system (32) of an aircraft powerplant (24) to provide a first quantity of power and/or torque to drive rotation of a propulsor rotor (22); and
testing a second power system (34) of the aircraft powerplant (24) during the operating of the first power system (32), the second power system (34) comprising an electric machine (84), and the testing of the second power system (34) comprising:
signaling the second power system (34) to use the electric machine (84) to provide a second quantity of power and/or torque to further drive the rotation of the propulsor rotor (22);
determining an operational parameter of the aircraft powerplant (24) following the signaling; and
evaluating operability of the second power system (34) by comparing the operational parameter to a threshold.

2. The method of claim 1, wherein the operational parameter is indicative of power output by the aircraft powerplant (24).

3. The method of claim 1, wherein the operational parameter is indicative of torque output by the aircraft powerplant (24).

4. The method of claim 1, wherein the operational parameter is indicative of power output by the second power system (34).

5. The method of claim 1, wherein the operational parameter is indicative of torque output by the second power system (24).

6. The method of any preceding claim, wherein the threshold comprises an expected value of the operational parameter, optionally wherein the method further comprises determining the second power system (34) has a fault where the operational parameter is less than the expected value.

7. The method of any of claims 1 to 5, wherein the threshold comprises an expected operating range for the operational parameter, optionally wherein the method further comprises determining the second power system (34) has a fault where the operational parameter is outside of the expected operating range.

8. The method of any preceding claim, wherein the first power system (32) is operated at a constant power and/or a constant torque setting during the testing of the second power system (34).

9. The method of any preceding claim, wherein the propulsor rotor (22) is an un-ducted propulsor rotor.

10. The method of any of claims 1 to 8, wherein the propulsor rotor (22) is a ducted propulsor rotor.

11. The method of any preceding claim, wherein:
an aircraft comprises the aircraft powerplant (24); and
the testing of the second power system (34) is performed while the aircraft is in flight.

12. The method of any preceding claim, wherein the first power system (32) and the second power system (34) are individually coupled to the propulsor rotor (22) through a geartrain (104).

13. The method of any preceding claim, wherein:
the first power system (32) comprises a turbo-compounded intermittent internal combustion engine (50); and
the turbo-compounded intermittent internal combustion engine (50) provides the first quantity of power and/or torque to drive the rotation of the propulsor rotor (22) during the operating of the first power system (32).

14. The method of any of claims 1 to 12, wherein:
the first power system (32) comprises a gas turbine engine (116); and
the gas turbine engine (116) provides the first quantity of power and/or torque to drive the rotation of the propulsor rotor (22) during the operating of the first power system (32).

15. The method of any of claims 1 to 12, wherein:
the first power system (32) comprises an electric motor (120); and
the electric motor (120) provides the first quantity of power and/or torque to drive the rotation of the propulsor rotor (22) during the operating of the first power system (32).
